# EUROPEAN PATENT APPLICATION

(11) **EP 4 202 798 A1**
(43) Date of publication of application: **28.06.2023**
(21) Application number: 20950350.7
(22) Date of filing: 21.08.2020
(51) Int. Cl.: G06N 20/00

(54) **TRAINING DATA GENERATION PROGRAM, TRAINING DATA GENERATION METHOD, AND TRAINING DATA GENERATION DEVICE**

(71) Applicant: FUJITSU LIMITED, Kawasaki-shi, Kanagawa 211-8588 (JP)
(72) Inventor: CHENG, Yuchang, Kawasaki-shi, Kanagawa 211-8588 (JP)
(74) Representative: Hoffmann Eitle
(86) International application number: PCT/JP2020/031713
(87) International publication number: WO 2022/038785

(57) **Abstract**

A training data generation program for causing a computer to execute processing including: acquiring a first value by inputting first data included in a plurality of pieces of first training data to a first model that is generated through machine learning based on the plurality of pieces of first training data; acquiring a second value by inputting the first data and second data included in a plurality of pieces of second training data to a second model that is generated through machine learning based on the plurality of pieces of first and second training data; comparing the first value with the second value; and generating a plurality of pieces of third training data that does not include at least a part of the first data, based on the plurality of pieces of first and second training data, according to a result of the comparison.

## Description

### TECHNICAL FIELD

The embodiments according to the present invention relate to a training data generation program, a training data generation method, and a training data generation device.

### BACKGROUND ART

Typically, in natural language processing of an automatic translation system or the like, a machine learning model with a machine learning technology is utilized for conversion processing from a discrete series (original language) into another discrete series (translation target language). In the natural language processing, new words and new meanings of existing words increase due to word changes (concept drift), and tendency of input data and tendency of an output for the input change. Therefore, the machine learning model is retrained in order to maintain an output quality.

In retraining, in a case where old training data is included in training data for retraining, a retraining effect is lowered. For example, in a case where meaning (translation) of the same word changes, if retraining is performed in a state where both of a case of old meaning and a case of new meaning coexist in retraining data, it is difficult to train word translation well. Therefore, it is required to remove a training case, of which a retraining effect is lowered, from training data for retraining.

As related art for removing this training case, a learning quality estimation device has been known that can calculate a quality score using a forward-direction learned model for a training pair that includes an input and an output of a discrete series that may include an error in a correspondence relationship and remove erroneous data in training data used for machine learning such as natural language processing.

Examples of the related art include [Patent Document 1] Japanese Laid-open Patent Publication No. 2019-149030.

### SUMMARY

### TECHNICAL PROBLEM

However, with the related art described above, there is a problem in that it may be difficult to detect an inappropriate training case from old data included in retraining data. For example, in a case where there is less new additional data caused by a change of a word or the like in retraining, it is difficult to identify an inappropriate training case with a quality score of one machine learning model. Therefore, there is a case where an inappropriate training case is mixed in the training data for retraining, and there is a case where it is not possible to expect to improve a training effect.

In one aspect, an object is to provide a training data generation program, a training data generation method, and a training data generation device that can assist to improve an effect of machine learning.

### SOLUTION TO PROBLEM

In one idea, a training data generation program causes a computer to execute processing of acquiring a first value, processing of acquiring a second value, comparing processing, and generating processing. The processing of acquiring the first value acquires the first value by inputting first data included in a plurality of pieces of first training data to a first model that is generated through machine learning based on the plurality of pieces of first training data. The processing of acquiring the second value acquires the second value by inputting the first data and second data included in a plurality of pieces of second training data to a second model that is generated through machine learning based on the plurality of pieces of first training data and the plurality of pieces of second training data. The comparing processing compares the first value with the second value. The generating processing generates a plurality of pieces of third training data that does not include at least a part of the first data, based on the plurality of pieces of first training data and the plurality of pieces of second training data, according to a comparison result.

### ADVANTAGEOUS EFFECTS OF INVENTION

It is possible to assist to improve an effect of machine learning.

### BRIEF DESCRIPTION OF DRAWINGS

FIG. 1 is an explanatory diagram for explaining an outline of an embodiment.
FIG. 2 is a block diagram illustrating a functional configuration example of an information processing device according to a first embodiment.
FIG. 3 is a flowchart illustrating an operation example of the information processing device according to the first embodiment.
FIG. 4 is an explanatory diagram for explaining an outline of processing of the information processing device according to the first embodiment.
FIG. 5 is an explanatory diagram for explaining an example of score calculation.
FIG. 6A is an explanatory diagram for explaining an outline of the processing of the information processing device according to the first embodiment.
FIG. 6B is an explanatory diagram for explaining the outline of the processing of the information processing device according to the first embodiment.
FIG. 7 is a flowchart illustrating an operation example of an information processing device according to a second embodiment.
FIG. 8 is an explanatory diagram for explaining an outline of processing of the information processing device according to the second embodiment.
FIG. 9 is a block diagram illustrating a functional configuration example of an information processing device according to a third embodiment.
FIG. 10 is a flowchart illustrating an operation example of the information processing device according to the third embodiment.
FIG. 11 is an explanatory diagram for explaining an example of second training data.
FIG. 12 is a block diagram illustrating a functional configuration example of an information processing device according to a fourth embodiment.
FIG. 13 is a flowchart illustrating an operation example of the information processing device according to the fourth embodiment.
FIG. 14 is a flowchart illustrating an operation example of an information processing device according to a fifth embodiment.
FIG. 15 is an explanatory diagram for explaining an outline of processing of the information processing device according to the fifth embodiment.
FIG. 16 is a block diagram illustrating a functional configuration example of an information processing device according to a sixth embodiment.
FIG. 17 is a flowchart illustrating an operation example of the information processing device according to the sixth embodiment.
FIG. 18 is a block diagram illustrating a functional configuration example of an information processing device according to a seventh embodiment.
FIG. 19 is a flowchart illustrating an operation example of the information processing device according to the seventh embodiment.
FIG. 20 is a block diagram illustrating an example of a computer configuration.

### DESCRIPTION OF EMBODIMENTS

Hereinafter, a training data generation program, a training data generation method, and a training data generation device according to embodiments will be described with reference to the drawings. Configurations having the same functions in the embodiments are denoted by the same reference signs, and redundant description will be omitted. Note that the training data generation program, the training data generation method, and the training data generation device to be described in the following embodiments are merely examples, and do not limit the embodiments. Furthermore, the following embodiments may be appropriately combined unless otherwise contradicted.

### (Outline)

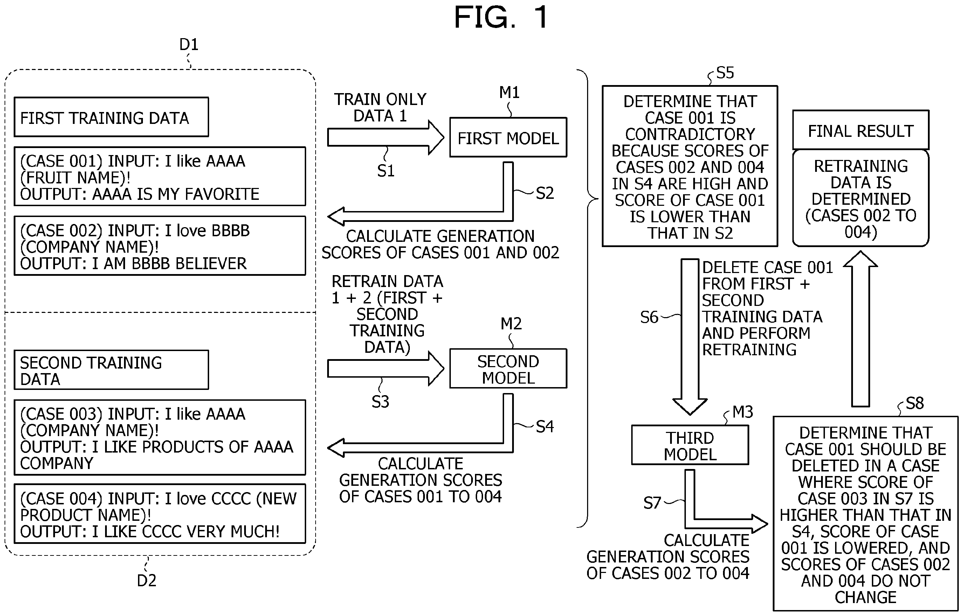

FIG. 1 is an explanatory diagram for explaining an outline of an embodiment. As illustrated in FIG. 1, the present embodiment copes with concept drift or the like, generates retraining data of a model through machine learning in order to maintain an output quality, excludes a case where an effect of retraining is lowered, and generates training data for retraining as a final result.

Note that, in the present embodiment, as a model to be retrained, a model used for conversion processing from a discrete series (original language) to another discrete series (translation target language) is exemplified. However, it is sufficient that a model to which the present embodiment is applied be a model to be retrained in response to a change, and the model is not limited to a model used for such natural language processing. For example, it may be applied to retraining of a model in a recommendation system using a model that uses a feature amount of a customer as an input and outputs a recommended product (product category) for the customer.

As illustrated in FIG. 1, first training data D1 is training data relating to an old case before change. Second training data D2 is training data related to a new case (change in meaning of word or way of speaking, new word (unregistered word such as new product name)) after changes due to the concept drift or the like. Each case includes an input to a model and an output to be a correct answer.

For example, the first training data D1 includes a case 001 of which an input is "I like AAAA (fruit name)!" and an output is "AAAA is my favorite" and a case 002 of which an input is "I love BBBB (company name)!" and an output is "I am a BBBB believer". Furthermore, the second training data D2 includes a case 003 of which an input is "I like AAAA (company name)!" and an output is "I like products of AAAA company" and a case 004 of which an input is "I love CCCC (new product name)!" and an output is "I like CCCC very much!".

Here, in the second training data D2, the case 003 is a case indicating a change in meaning with respect to the case 001 ("AAAA (fruit) → AAAA (company name)". In other words, both inputs are "I like AAAA". However, the output of the case 001 is "AAAA is my favorite", and the output of the case 003 is "I like products of AAAA company". Furthermore, the case 004 is a case indicating a newly appeared word (unregistered word) "CCCC (new product name)".

In a case where training is performed with the new and old cases (case 001 to case 004) described above at the time of retraining, since the case 002 has only the old case, training can be performed if the new and old cases coexist. Similarly, since the case 004 has only the new case, training can be performed if the new and old cases coexist. On the other hand, since the cases 001 and 003 have the same inputs (or almost the same) but different outputs, the cases 001 and 003 have the inputs and outputs contradict with each other in a case where the new and old cases coexist. Therefore, in a case where the case 001 and the case 003 coexist, it is not possible to train both of the cases. In other words, in a case where the case 001 and the case 003 coexist, a retraining effect is lowered.

Therefore, in the present embodiment, a first model M1 is generated by performing machine learning with the first training data D1 (S1). Next, in the present embodiment, the first training data D1 is input to the generated first model M1, and generation scores (score related to output of first model M1) of the cases 001 and 002 in the first training data D1 are calculated (S2).

Next, in the present embodiment, a second model M2 is generated by performing machine learning with the first training data D1 and the second training data D2 (S3). Next, in the present embodiment, the first training data D1 and the second training data D2 are input to the generated second model M2, and generation scores (score related to output of second model M2) of the cases 001 to 004 are calculated (S4).

In a case where generation scores of a new and old cases are calculated using the second model M2 that is trained with the new and old cases, if there is a contradictory case among the new and old cases, a generation score related to an output of the contradictory case is lowered. Furthermore, a generation score related to an output of a non-contradictory case can be maintained at a high level.

Therefore, in the present embodiment, the generation score in S2 is compared with the generation score in S4, and training data that does not include a case that is determined to be contradictory among the old cases of the first training data D1 is generated based on training data obtained by adding the second training data D2 to the first training data D1. Specifically, in the present embodiment, the generation scores of the cases 002 and 004 in S4 are high, and the generation score of the case 001 is lower than S2, it is determined that the case 001 among the old cases is contradictory (S5). As a result, based on the training data obtained by adding the second training data D2 to the first training data D1, training data that does not include the case 001 among the old cases is generated.

Next, in the present embodiment, in order to confirm that the deleted case 001 is a case (noise) that lowers an output quality, machine learning is performed by deleting the case 001 from the training data obtained by adding the second training data D2 to the first training data D1, and a third model M3 is generated (S6). Next, in the present embodiment, the cases 002 to 004 are input to the generated third model M3, and generation scores (score related to output of third model M3) of the cases 002 to 004 are calculated (S7). Here, a generation score of a non-contradictory case is almost unchanged, and even if the generation score is fluctuated, it can be assumed that the fluctuation is a slight decrease (effect of decrease in training data scale).

Next, in the present embodiment, in a case where the generation score of the case 003 in S7 is higher than the generation score in S4 and the generation scores of the cases 002 and 004 in S7 are almost unchanged, it is confirmed that the deleted case 001 is a case (noise) that lowers the output quality. Based on this confirmation, in the present embodiment, it is determined that the case 001 should be deleted (S8).

Therefore, in the present embodiment, retraining data obtained by deleting the case 001 from the training data that is obtained by adding the second training data D2 to the first training data D1 is determined (cases 002 to 004). In this way, in the present embodiment, by using the generation scores of the first model M1 and the second model M2, it is possible to accurately remove the case (noise) that lowers the output quality and generate training data that is expected to improve a retraining effect. Furthermore, in the present embodiment, by using the generation score of the third model M3, it is possible to generate training data for retraining after identifying that the case to be removed is a case that lowers the output quality.

### (First Embodiment)

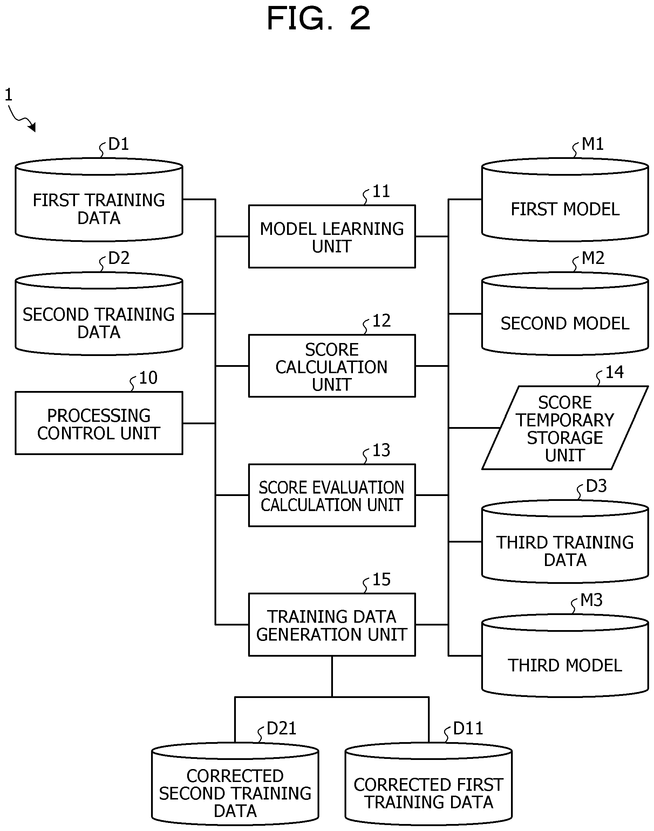

FIG. 2 is a block diagram illustrating a functional configuration example of an information processing device according to a first embodiment. As illustrated in FIG. 2, an information processing device 1 includes a processing control unit 10, a model learning unit 11, a score calculation unit 12, a score evaluation calculation unit 13, a score temporary storage unit 14, and a training data generation unit 15. For example, a personal computer (PC) or the like can be applied to this information processing device 1.

The processing control unit 10 is a processing unit that controls execution of processing of generating retraining data.

The model learning unit 11 is a processing unit that generates a model by executing processing related to known machine learning. Specifically, the model learning unit 11 performs machine learning of a model (optimization of parameter) so as to generate an output sequence from an input sequence of training data of which an input and an output are paired.

For example, the model learning unit 11 generates a first model M1 by performing training using first training data D1. Furthermore, the model learning unit 11 generates a second model M2 by performing training using second training data D2 that includes the first training data D1. Furthermore, the model learning unit 11 generates a third model M3 by performing training using third training data D3.

Here, the first training data D1 is training data, in which an input (for example, original language) and an output (for example, translation target language) of a discrete series of a natural language are paired, for generating a model related to translation that is operated by an automatic translation system. The second training data D2 is training data that includes a new case after changes caused by concept drift or the like, in addition to the first training data D1. The third training data D3 is training data that is newly created as training data that does not include a case that is determined to be contradictory among old cases, based on the first training data D1 and the second training data D2.

The score calculation unit 12 is a processing unit that, when the model generated through machine learning is applied to each input of the training data and each corresponding output is generated, calculates a score related to the output. For the calculation of this score, for example, a known calculation method as in Japanese Laid-open Patent Publication No. 2019-149030 or the like is used. The score calculation unit 12 stores the calculated score in the score temporary storage unit 14 after assigning identification information (for example, ID) for each training data (case).

For example, the score calculation unit 12 inputs the first training data D1 to the first model M1, calculates a generation score of each input case, and stores the generation score in the score temporary storage unit 14. Furthermore, the score calculation unit 12 inputs the second training data D2 to the second model M2, calculates a generation score of each input case, and stores the generation score in the score temporary storage unit 14. Furthermore, the score calculation unit 12 inputs the third training data D3 to the third model M3, calculates a generation score of each input case, and stores the generation score in the score temporary storage unit 14.

The score evaluation calculation unit 13 is a processing unit that compares the generation scores stored in the score temporary storage unit 14, evaluates a change in the generation score, and detects a case to be deleted from the training data. For example, the score evaluation calculation unit 13 compares the generation score of the second model M2 with the generation score of the first model M1 and detects a contradictory case from among the old cases.

The score temporary storage unit 14 is a processing unit that temporarily stores the generation score calculated by the score calculation unit 12 in a memory or the like. Specifically, the score temporary storage unit 14 associates a generation source model with the training data (case) and stores the generation score.

The training data generation unit 15 is a processing unit that deletes a case designated as the case to be deleted based on the detection result of the score evaluation calculation unit 13 in the training data of the second training data D2 that includes the first training data D1 and generates the third training data D3. Furthermore, the training data generation unit 15 confirms that the deleted case is a case that lowers the output quality of the model by using the generation score of the third model M3, and then, generates training data for retraining (corrected first training data D11 and corrected second training data D21) as a final result.

The corrected second training data D21 is an output of the confirmed third training data D3 as a processing result. The corrected first training data D11 is data obtained by extracting only training data included in the first training data D1, from the third training data D3.

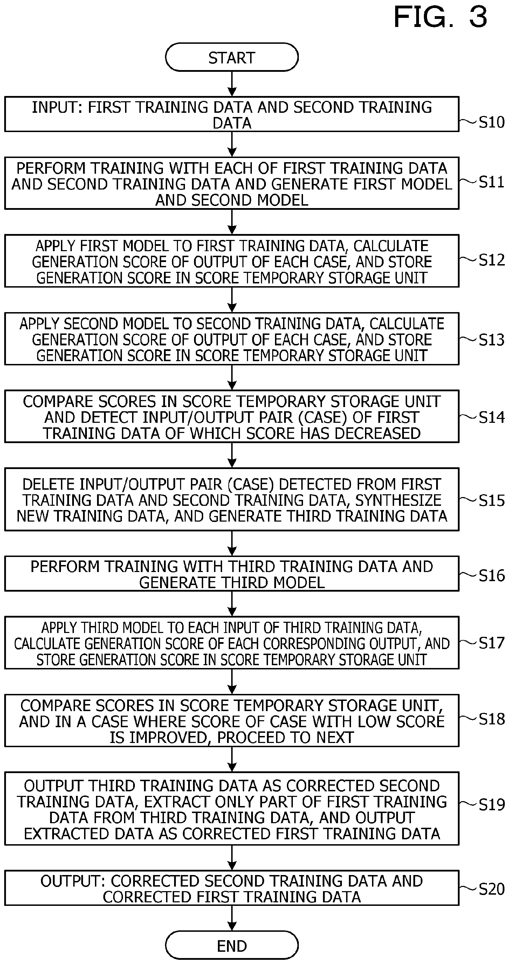

FIG. 3 is a flowchart illustrating an operation example of the information processing device 1 according to the first embodiment. As illustrated in FIG. 3, when processing starts, the processing control unit 10 receives inputs of the first training data D1 and the second training data D2 (S10).

Next, the model learning unit 11 performs training with each of the first training data D1 and the second training data D2 and generates the first model M1 and the second model M2 (S11). Specifically, the model learning unit 11 generates the first model M1 by performing training using the first training data D1. Furthermore, the model learning unit 11 generates the second model M2 by performing training using the second training data D2.

Next, the score calculation unit 12 applies the first model M1 to the first training data D1, calculates a generation score of an output of each case included in the first training data D1, and stores the generation score in the score temporary storage unit 14 (S12).

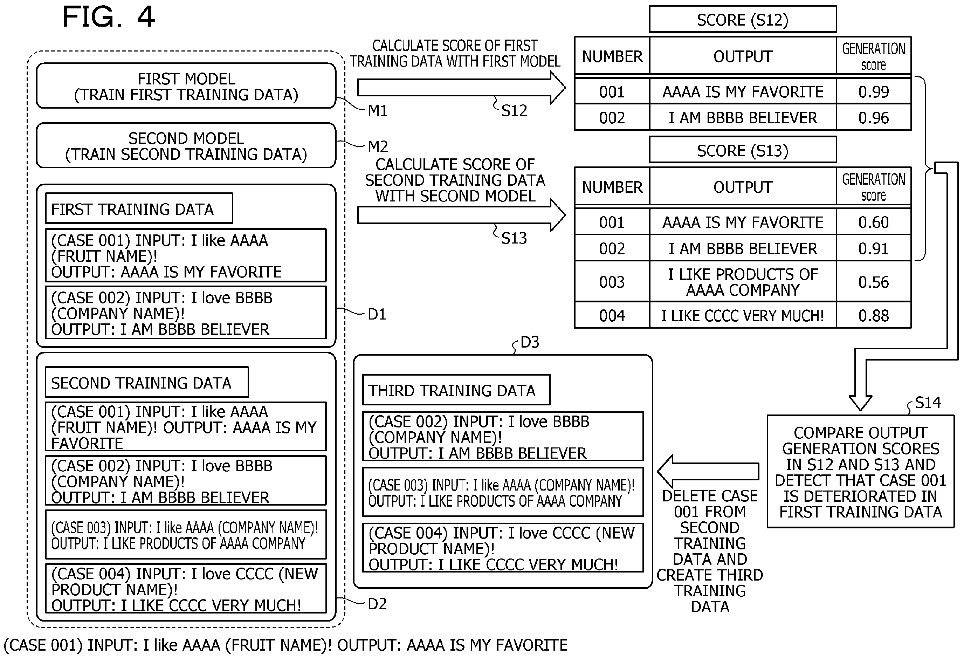

FIG. 4 is an explanatory diagram for explaining an outline of processing of the information processing device according to the first embodiment. As illustrated in FIG. 4, the score calculation unit 12 calculates the generation score of each case included in the first training data D1 with the first model M1 in S12. As a result, for example, a generation score 0.99 is obtained for a case 001 with a number 001. Furthermore, for a case 002 with a number 002, a generation score 0.96 is obtained.

Next, the score calculation unit 12 applies the second model M2 to the second training data D2, calculates a generation score of an output of each case included in the second training data D2, and stores the generation score in the score temporary storage unit 14 (S13). For example, as illustrated in FIG. 4, in S13, the generation score of each case (case 001 to case 004) included in the second training data D2 is obtained. For example, a generation score 0.60 is obtained for the case 001 with the number 001. Furthermore, a generation score 0.91 is obtained for the case 002 with the number 002. Furthermore, a generation score 0.56 is obtained for a case 003 with a number 003. Furthermore, a generation score 0.88 is obtained for a case 004 with a number 004.

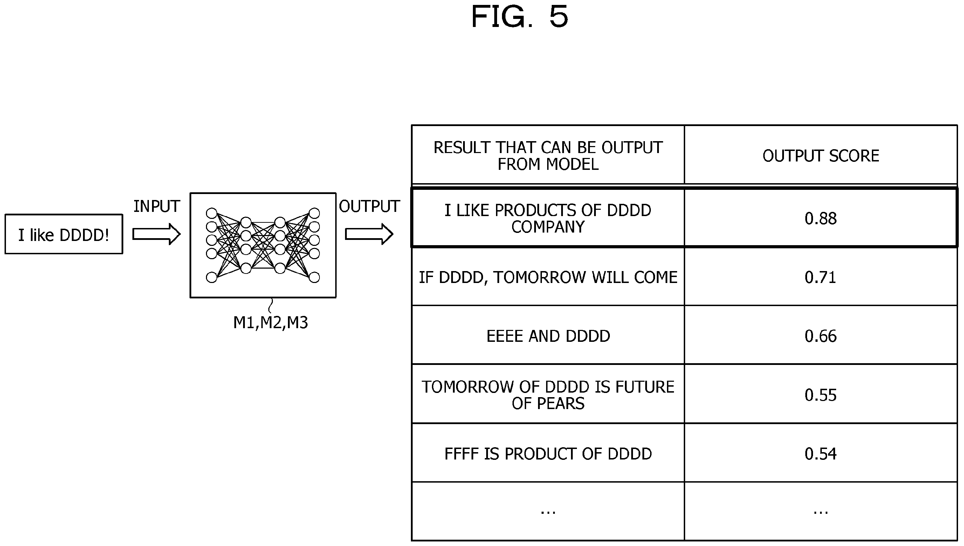

FIG. 5 is an explanatory diagram for explaining an example of score calculation. As illustrated in FIG. 5, for score calculation of the generation score by the score calculation unit 12, a score for a result (output) obtained by inputting each case to the first model M1, the second model M2, the third model M3, or the like may be used. Furthermore, as another method of the score calculation by the score calculation unit 12, an entire rank of a correct answer output may be calculated as Score = - log (n / N) while assuming that N = the total number of possible outputs and n = a rank of a correct answer output. Moreover, the score calculation unit 12 may weight a score of a correct answer output with an entire rank while assuming that Score = - log (n / N * s) and s = a score of a correct answer output.

Returning to FIG. 3, following to S13, the score evaluation calculation unit 13 compares the generation scores in S12 and S13 in the score temporary storage unit 14 and detects an input/output pair (case) of the first training data D1 of which the score decreases in S13 (S14). As a result, as illustrated in FIG. 4, the score evaluation calculation unit 13 detects that the generation score of the case 001 in the first training data D1 has deteriorated as 0.89 → 0.60 (S14).

Next, the training data generation unit 15 deletes the input/output pair (case) detected in S14 from the first training data D1 and the second training data D2 and generates the third training data D3 by synthesizing deleted new training data (S15). Specifically, as illustrated in FIG. 4, the training data generation unit 15 deletes the case 001, in which the deterioration in the generation score is detected in S14, from the second training data D2 and creates the third training data D3. In other words, the third training data D3 is obtained by deleting the case 001 from the second training data D2.

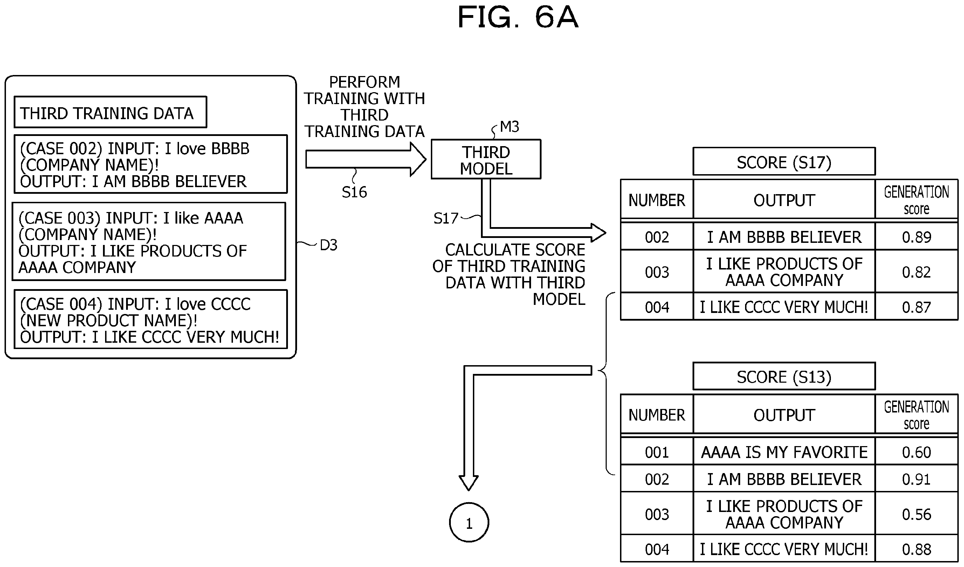

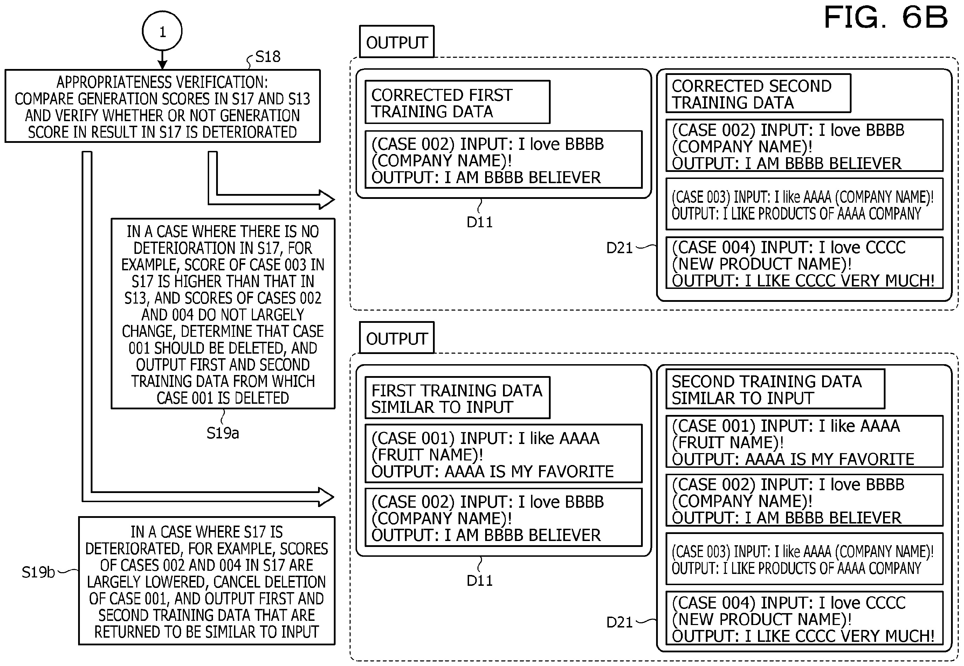

Next, the model learning unit 11 generates the third model M3 by performing training using the third training data D3 (S16). FIGs. 6A and 6B are explanatory diagrams for explaining an outline of processing of the information processing device according to the first embodiment. As illustrated in FIG. 6A, the model learning unit 11 generates the third model M3 through machine learning using the cases 002 to 004 included in the third training data D3 in S16.

Next, the score calculation unit 12 applies the third model M3 to each input of the third training data D3, calculates a generation score of each output corresponding to the input, and stores the generation score in the score temporary storage unit 14 (S17). Specifically, as illustrated in FIG. 6A, the score calculation unit 12 calculates the generation scores of the respective cases (cases 002 to 004) included in the third training data D3 with the third model M3 in S17. As a result, for example, a generation score 0.89 is obtained for the case 002 with the number 002. Furthermore, a generation score 0.82 is obtained for the case 003 with the number 003. Furthermore, a generation score 0.87 is obtained for the case 004 with the number 004.

Next, the score evaluation calculation unit 13 compares the generation scores in S17 and S13 in the score temporary storage unit 14, and proceeds the processing to next S19 in a case where the score of the case where the generation score is low in S13 is improved in S17 (S18).

Specifically, as illustrated in FIG. 6B, the score evaluation calculation unit 13 compares in S18 the generation scores in S17 and S13 and verifies appropriateness indicating whether or not the generation score in the result in S17 is deteriorated.

In S19, the training data generation unit 15 outputs the third training data D3 as corrected second training data D21, and extracts only a certain part of the first training data D1 from the third training data D3 and outputs the extracted part as corrected first training data D11. Next, the training data generation unit 15 outputs the corrected second training data D21 and the corrected first training data D11 as final results of training data for retraining (S20) and ends the processing.

For example, as illustrated in FIG. 6B, in a case where the generation score of the case 003 in S17 is higher than that in S13 and the generation scores of the cases 002 and 004 do not largely change, the score evaluation calculation unit 13 determines in S18 that S17 is not deteriorated and the case 001 should be deleted. Based on this determination result, the training data generation unit 15 outputs the corrected second training data D21 and the corrected first training data D11 from which the case 001 is deleted (S19a).

Furthermore, as illustrated in FIG. 6B, in a case where the generation scores of the cases 002 and 004 in S17 are largely lowered, the score evaluation calculation unit 13 determines in S18 that S17 is deteriorated and the deletion of the case 001 is cancelled. Based on this determination result, the training data generation unit 15 outputs the corrected first training data D11 and the corrected second training data D21 that are returned to the first training data D1 and the second training data D2 that are similar to those at the time of input (S19b).

In this way, in the first embodiment, training data (third training data D3) that is expected to improve a retraining effect can be generated. Furthermore, in the first embodiment, it is possible to generate the training data for retraining (corrected first and second training data D11 and D21) after identifying that the case to be removed is a case that lowers the output quality, for the third training data D3.

### (Second Embodiment)

A second embodiment is different from the first embodiment in that statistics amounts (deviation and average value of score) of the generation scores in S12 and S13 in the score temporary storage unit 14 are compared so as to obtain training data (case) to be deleted.

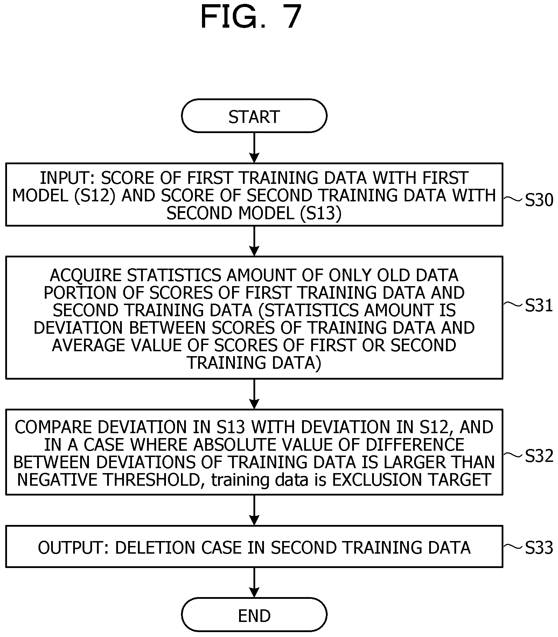

FIG. 7 is a flowchart illustrating an operation example of an information processing device 1 according to the second embodiment. As illustrated in FIG. 7, when processing starts, a score evaluation calculation unit 13 receives inputs of the generation score of the first training data D1 with the first model M1 (S12) and the generation score of the second training data D2 with the second model M2 (S13) (S30).

Next, the score evaluation calculation unit 13 acquires a statistics amount of only an old training data portion (part excluding new training data) of the generation scores of the first training data D1 and the second training data D2 (S31). The statistics amount acquired here is an average value of the generation scores of the first training data D1 or the second training data D2 and a deviation between the generation scores of the respective pieces of training data (difference between generation score and average value).

Next, in a case where the generation score is deteriorated, a difference in the deviation is a negative number. Therefore, the score evaluation calculation unit 13 assumes training data that satisfies such conditions as a deletion target. Specifically, the score evaluation calculation unit 13 compares the deviation in S13 with the deviation in S12, and in a case where an absolute value of a difference between the deviations of the pieces of training data (case) is larger than a negative specific threshold, the score evaluation calculation unit 13 assumes the training data (case) as a deletion target (S32). Next, the score evaluation calculation unit 13 outputs the case to be deleted in the second training data D2 to a training data generation unit 15 (S33). As a result, the training data generation unit 15 deletes the case from the second training data D2 based on the output from the score evaluation calculation unit 13 and generates third training data D3.

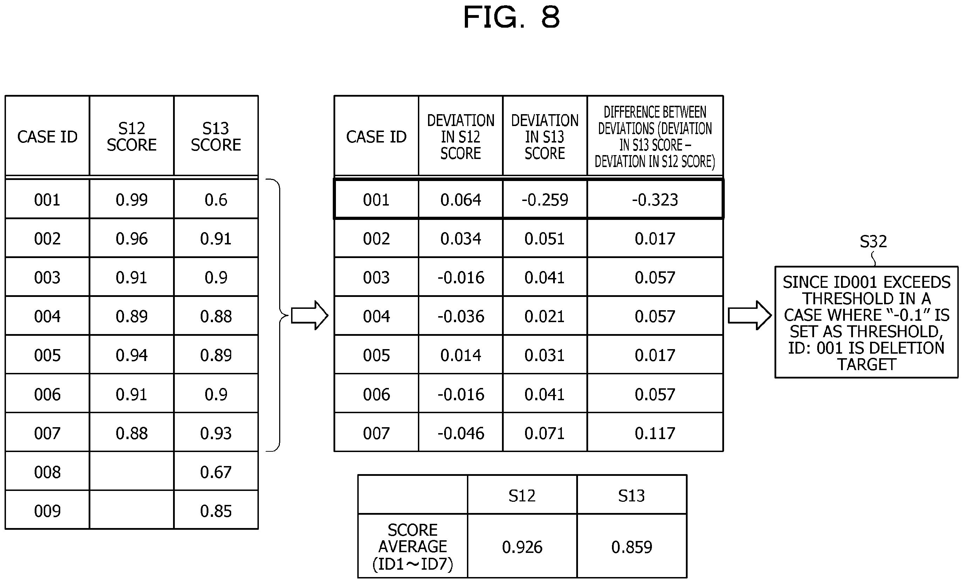

FIG. 8 is an explanatory diagram for explaining an outline of processing of the information processing device 1 according to the second embodiment. In FIG. 8, case IDs 001 to 007 correspond to old training data (first training data D1). Furthermore, case IDs 008 and 009 correspond to new training data (additional part for first training data D1 in second training data D2).

As illustrated in FIG. 8, the score evaluation calculation unit 13 acquires statistics amounts (deviation of score and score average) for the old training data portions (case IDs 001 to 007) of the generation scores of the first training data D1 and the second training data D2. Next, the score evaluation calculation unit 13 compares a deviation difference with a negative threshold (for example, -0.1) and determines the case ID 001 that satisfies the conditions as a deletion target.

Note that this threshold may be designated by a user in advance. Furthermore, the threshold may be automatically set according to a negative value of a standard deviation of the score in S13 or negative values of the average in S13 and the score difference in S12.

In this way, in the second embodiment, by comparing the generation scores using the statistics amounts, it is possible to robustly determine a deletion target case with respect to a noise included in the generation score.

### (Third Embodiment)

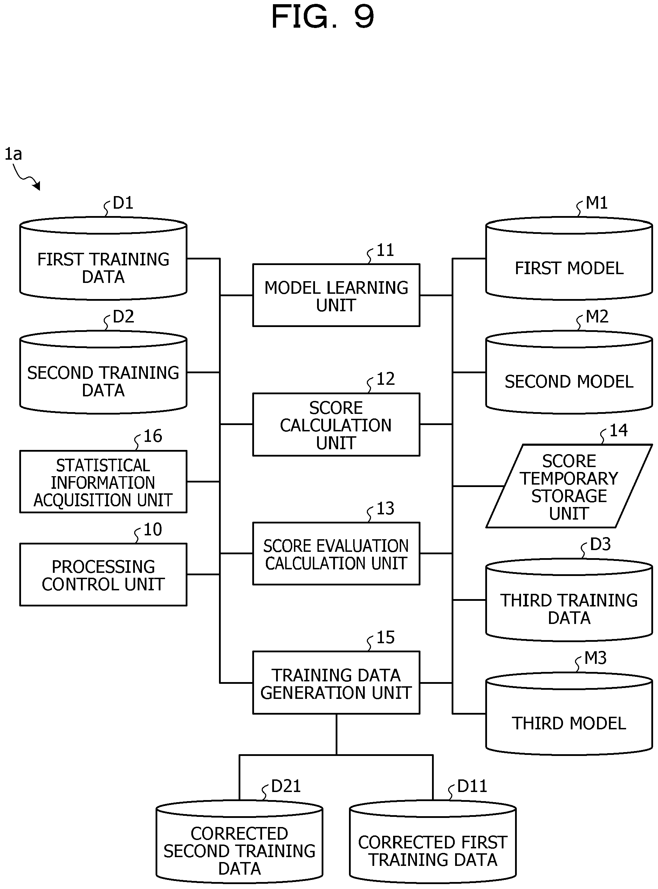

FIG. 9 is a block diagram illustrating a functional configuration example of an information processing device according to a third embodiment. As illustrated in FIG. 9, an information processing device 1a is different from the information processing device 1 described above in that the information processing device 1a includes a statistical information acquisition unit 16.

The statistical information acquisition unit 16 is a processing unit that acquires statistical information (statistical information of words in present embodiment) of a plurality of cases included in first training data D1 and a plurality of cases included in second training data D2. Specifically, the statistical information acquisition unit 16 acquires an appearance frequency of the case and a co-occurrence frequency of mutual cases, for each case (word) included in the first training data D1 and the second training data D2.

A score evaluation calculation unit 13 determines training data corresponding to a case (old case included in first training data D1) of which statistical information satisfies a specific condition as exclusion (deletion) target, based on the statistical information acquired by the statistical information acquisition unit 16. In this way, a case of a word change (concept drift) or the like is specified based on the statistical information, and the case may be assumed as a deletion target.

For example, in a case where appearance frequencies of a word in inputs or outputs in the new and old pieces of training data largely change, the score evaluation calculation unit 13 assumes a case of the training data including the word to be excluded as assuming that the case has a word change (concept drift). Similarly, in a case where co-occurrence frequencies of a word in inputs or outputs of cases in the new and old pieces of training data change, the score evaluation calculation unit 13 assumes a case including the word to be excluded as assuming that the case has a word change (concept drift).

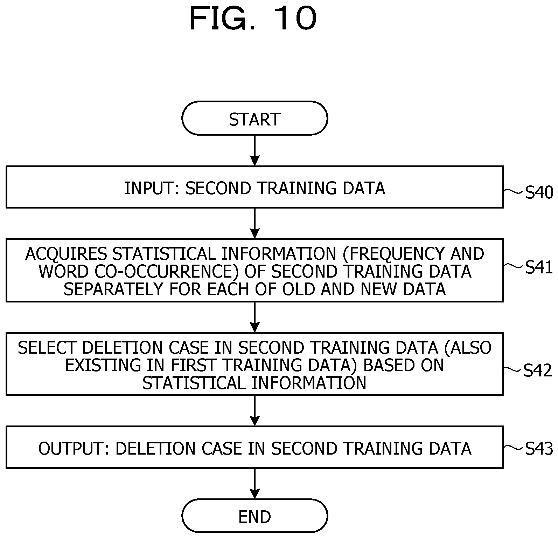

FIG. 10 is a flowchart illustrating an operation example of the information processing device 1a according to the third embodiment. As illustrated in FIG. 10, when processing starts, the statistical information acquisition unit 16 receives an input of the second training data D2 (S40). Next, the statistical information acquisition unit 16 acquires statistical information (appearance frequency of word and co-occurrence frequency of words) of the second training data D2 separately for each of the old and the new training data (S41).

Next, the score evaluation calculation unit 13 selects a deletion case in the second training data D2 that satisfies the condition described above, based on the statistical information acquired by the statistical information acquisition unit 16 (S42). Note that the score evaluation calculation unit 13 similarly selects a deletion case that exists in the first training data D1.

Next, the score evaluation calculation unit 13 outputs the deletion case in the second training data D2 to a training data generation unit 15 (S43). As a result, the training data generation unit 15 deletes the case from the second training data D2 based on the output from the score evaluation calculation unit 13 and generates third training data D3.

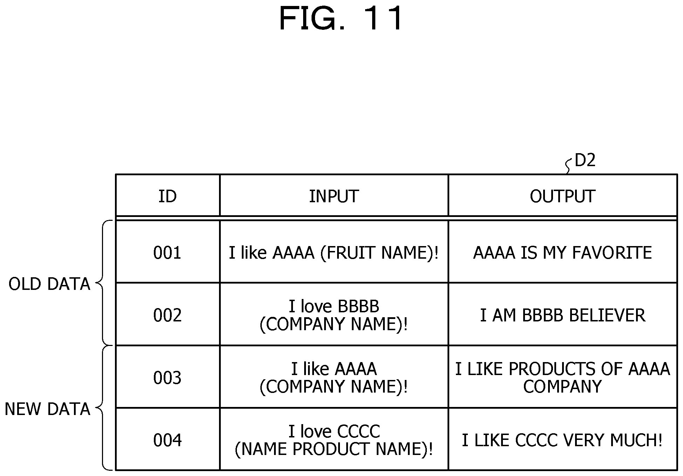

FIG. 11 is an explanatory diagram for explaining an example of the second training data D2. As illustrated in FIG. 11, in old data, although a co-occurrence frequency of an input "AAAA (fruit name)" and an output "favorite" is high, a co-occurrence frequency of "AAAA (company name)" and "favorite" in new data is low. Therefore, a case with an ID 001 in the old data is a deletion case. Note that a change in the co-occurrence frequency is determined, for example, based on comparison with a co-occurrence frequency threshold (SD) that is preset.

### (Fourth Embodiment)

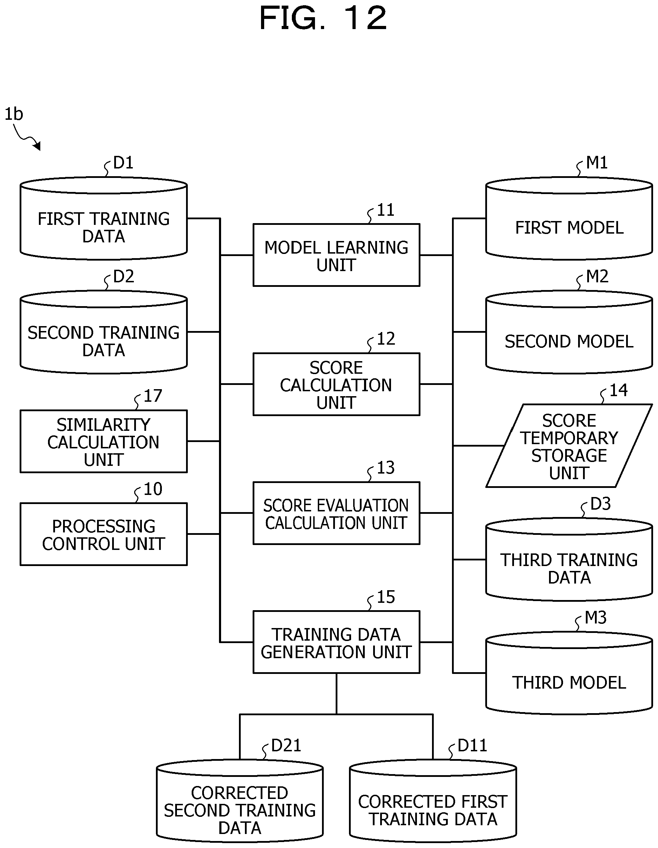

FIG. 12 is a block diagram illustrating a functional configuration example of an information processing device according to a fourth embodiment. As illustrated in FIG. 12, an information processing device 1b is different from the information processing device 1 described above in that the information processing device 1b includes a similarity calculation unit 17.

The similarity calculation unit 17 is a processing unit that compares a plurality of cases (input or output) included in second training data D2 with each other and acquires a similarity thereof. This similarity is acquired by applying a known method such as a method for calculating a similarity of a structure tree of data (sentence) or a method for calculating a similarity of a sentence through vector synthesis of constituent words in the sentence that is an extension of word2vec.

A score evaluation calculation unit 13 determines training data corresponding to a case (old case included in first training data D1) of which a similarity satisfies a specific condition as an exclusion (deletion) target, based on the similarity acquired by the similarity calculation unit 17. For example, the score evaluation calculation unit 13 determines cases (old case included in first training data D1) of which inputs (or output) are similar (equal to or more than specific similarity) and outputs (or input) are not similar as deletion cases. In this way, a case that has a word change (concept drift) is specified based on the similarity, and the case may be assumed as a deletion target.

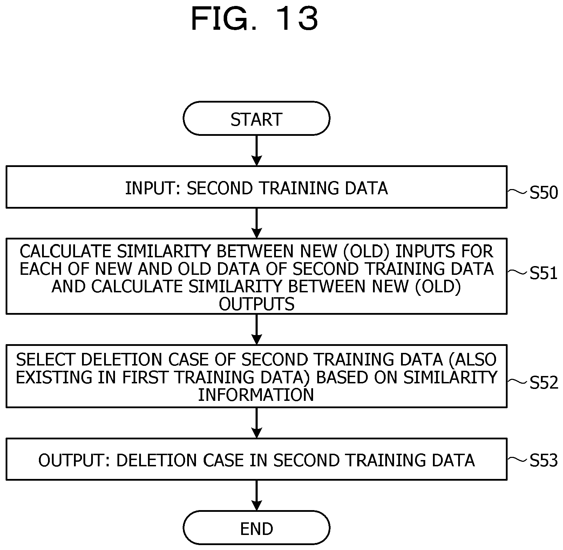

FIG. 13 is a flowchart illustrating an operation example of the information processing device 1b according to the fourth embodiment. As illustrated in FIG. 13, when processing starts, the similarity calculation unit 17 receives an input of the second training data D2 (S50). Next, the similarity calculation unit 17 calculates a similarity between new (old) inputs for each of new and old data of the second training data D2. Furthermore, the similarity calculation unit 17 calculates a similarity between new and old outputs (S51).

Next, the score evaluation calculation unit 13 selects a deletion case in the second training data D2 that satisfies the condition described above, based on information regarding the similarity calculated by the similarity calculation unit 17 (S52). Note that the score evaluation calculation unit 13 similarly selects a deletion case that exists in the first training data D1.

Next, the score evaluation calculation unit 13 outputs the deletion case in the second training data D2 to a training data generation unit 15 (S53). As a result, the training data generation unit 15 deletes the case from the second training data D2 based on the output from the score evaluation calculation unit 13 and generates third training data D3.

For example, in the example of the second training data D2 in FIG. 11, since inputs of both of a case with an ID 001 in the old data and a case with an ID 003 in the new data are "I like AAAA", a similarity between the inputs is equal to or more than the specific value. On the other hand, since an output of the case with the ID 001 is "AAAA is my favorite" and an output of the case with the ID 003 is "I like products of AAAA company", a similarity between the outputs is low (equal to or less than specific value). Therefore, the case with the ID 001 is a deletion target.

Note that the similarity is determined based on comparison with a preset threshold. For example, in a case where the similarity between one of the inputs and outputs is equal to or more than a similarity threshold (SS) and another similarity is equal to or less than a difference threshold (SI), the case is assumed as a deletion case.

### (Fifth Embodiment)

A fifth embodiment is different from the first embodiment in that the statistics amounts (deviation and average value of score) of the generation scores in S13 and S17 in the score temporary storage unit 14 are compared so as to confirm appropriateness of third training data D3.

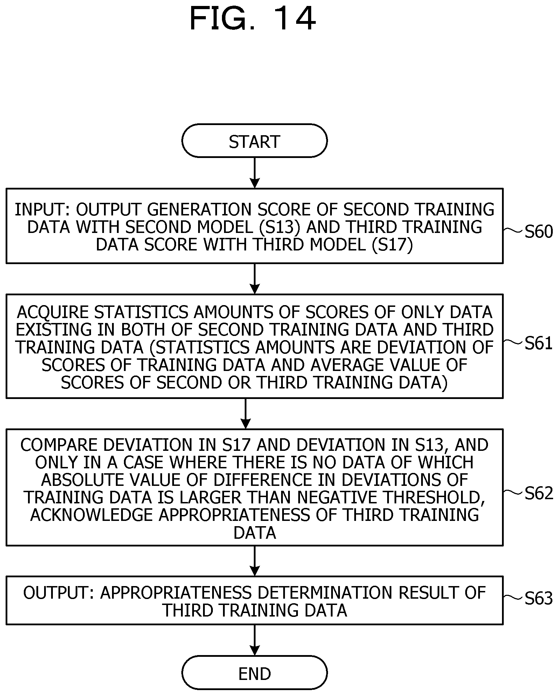

FIG. 14 is a flowchart illustrating an operation example of an information processing device 1 according to the fifth embodiment. As illustrated in FIG. 14, when processing starts, a score evaluation calculation unit 13 receives inputs of the generation score of the second training data D2 with the second model M2 (S13) and the generation score of the third training data D3 with the third model M3 (S17) (S60).

Next, the score evaluation calculation unit 13 acquires a statistics amount of a score of only data existing in both of the second training data D2 and the third training data D3 (S61). The statistics amount acquired here is an average value of the generation score of the second training data D2 or the third training data D3 and a deviation between the generation scores of the respective pieces of training data (difference between generation score and average value).

Next, in a case where the generation score is deteriorated, a difference in the deviation is a negative number. Therefore, the score evaluation calculation unit 13 acknowledges the appropriateness of the third training data D3 because training data that satisfies such conditions does not exist in the third training data D3. Specifically, the score evaluation calculation unit 13 compares the deviation in S17 with the deviation in S13, and in a case where there is no data of which an absolute value of a difference in the deviations of the training data (case) is larger than a negative specific threshold, the score evaluation calculation unit 13 acknowledges the appropriateness of the third training data D3 (S62).

Next, the score evaluation calculation unit 13 outputs a determination result of the appropriateness of the third training data D3 to a training data generation unit 15 (S63). As a result, the training data generation unit 15 outputs corrected first training data D11 and corrected second training data D21 based on the third training data D3 that is acknowledged to have the appropriateness. Note that, in a case where there is no appropriateness, the training data generation unit 15 outputs corrected first training data D11 and corrected second training data D21 that are similar to inputs.

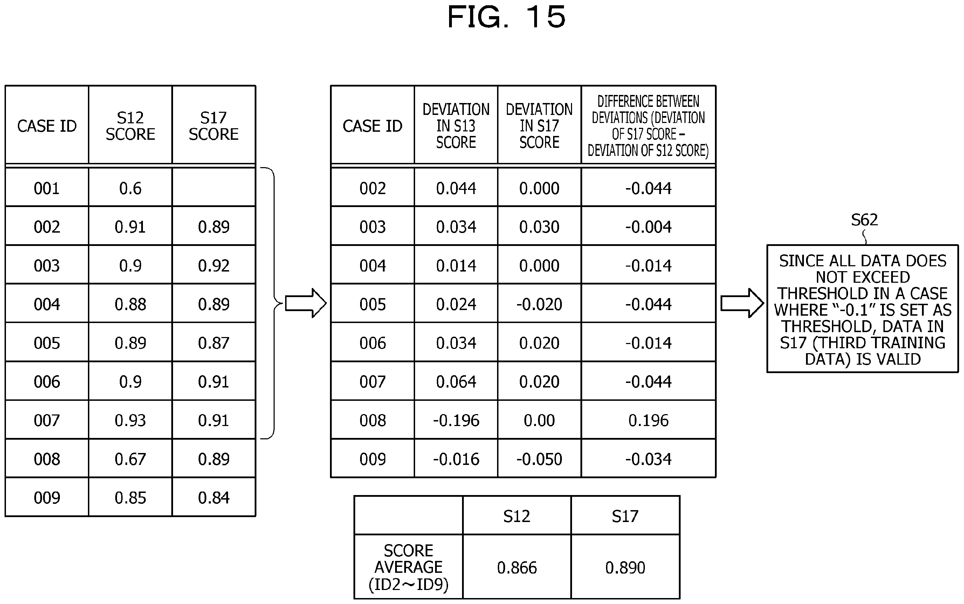

FIG. 15 is an explanatory diagram for explaining an outline of processing of the information processing device 1 according to the fifth embodiment. In FIG. 15, case IDs 002 to 009 correspond to data existing in both of the second training data D2 and the third training data D3.

As illustrated in FIG. 15, the score evaluation calculation unit 13 acquires statistics amounts (deviation of score and score average) of the case IDs 002 to 009 existing in both of the second training data D2 and the third training data D3. Next, the score evaluation calculation unit 13 compares a deviation difference with a negative threshold (for example, -0.1) and confirms whether or not there is a case that satisfies a condition. In the illustrated example, since there is no data (case) that exceeds the threshold of -0.1, appropriateness of data (third training data D3) in S17 is acknowledged.

In this way, in the fifth embodiment, by comparing the generation scores using the statistics amounts, it is possible to robustly determine the appropriateness of the third training data D3 with respect to a noise included in the generation score.

### (Sixth Embodiment)

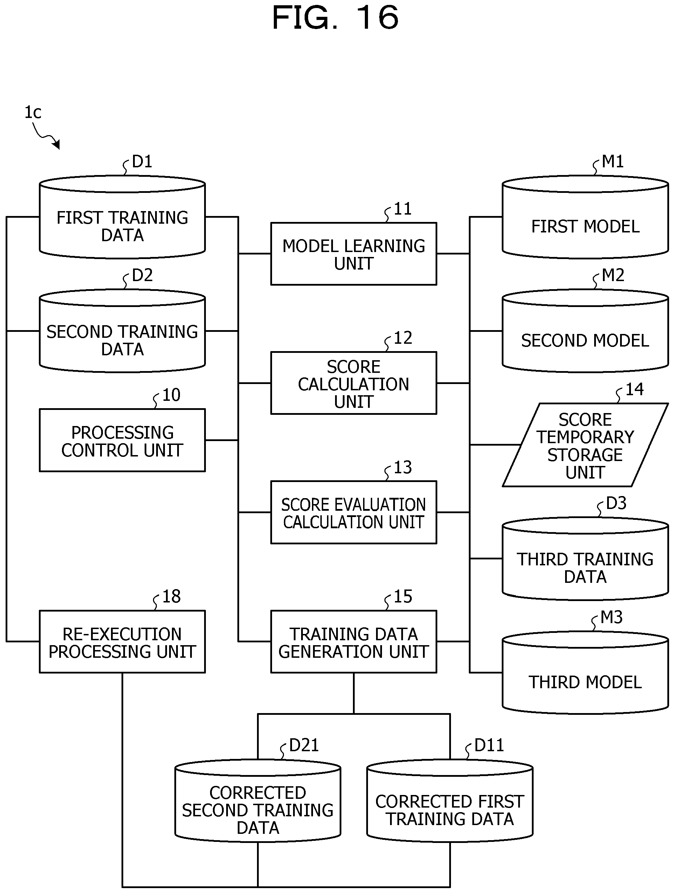

FIG. 16 is a block diagram illustrating a functional configuration example of an information processing device according to a sixth embodiment. As illustrated in FIG. 16, an information processing device 1c is different from the information processing device 1 described above in that the information processing device 1c includes a re-execution processing unit 18.

The re-execution processing unit 18 is a processing unit that sets corrected first training data D11 generated by a training data generation unit 15 as first training data D1 and corrected second training data D21 as second training data D2, and re-executes generation of the corrected first training data D11 and the corrected second training data D21 again.

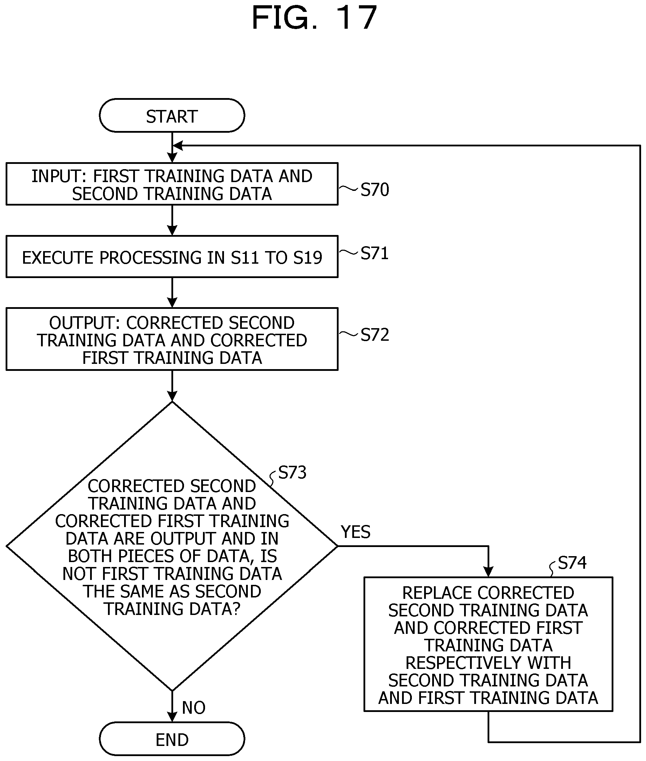

FIG. 17 is a flowchart illustrating an operation example of the information processing device 1c according to the sixth embodiment. As illustrated in FIG. 17, when processing starts, a processing control unit 10 receives inputs of the first training data D1 and the second training data D2 (S70). Next, the processing control unit 10 executes the processing in S11 to S19 described above, based on the received first training data D1 and second training data D2 (S71). As a result, the processing control unit 10 obtains outputs of the corrected second training data D21 and the corrected first training data D11 (S72).

Next, the re-execution processing unit 18 determines whether or not the corrected second training data D21 and the corrected first training data D11 are output and both pieces of data are respectively the same as the first training data D1 and the second training data D2 (S73).

In a case where both pieces of data are not the same as the first training data D1 and the second training data D2 (S73: Yes), the re-execution processing unit 18 respectively replaces the corrected second training data D21 and the corrected first training data D11 with the second training data D2 and the first training data D1 (S74) and returns the processing to S70. Note that, in a case where both pieces of data are the same as the first training data D1 and the second training data D2 (S73: No), the re-execution processing unit 18 ends the processing.

In this way, in the sixth embodiment, in a case where the corrected first training data D11 generated by the training data generation unit 15 is not the same as the first training data D1 and the corrected second training data D21 is not the same as the second training data D2, the corrected first training data D11 and the corrected second training data D21 are respectively replaced with the first training data D1 and the second training data D2. Next, based on the replaced first training data D1 and second training data D2, generation of the corrected first training data D11 and the corrected second training data D21 is performed again. In this way, by repeating the generation of the corrected first training data D11 and the corrected second training data D21, training data for retraining that is accurately converged can be obtained.

### (Seventh Embodiment)

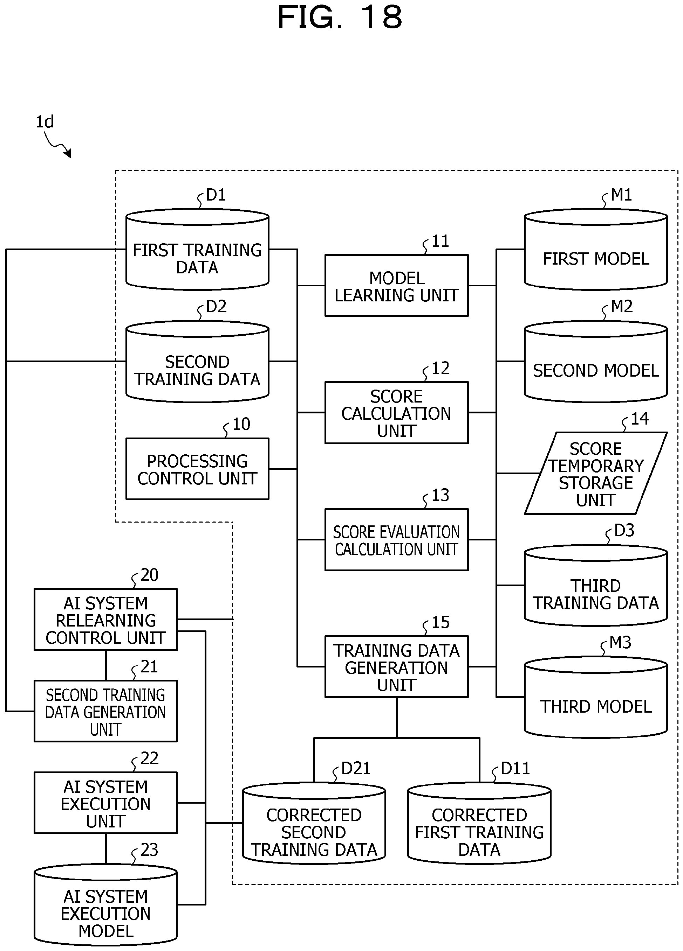

FIG. 18 is a block diagram illustrating a functional configuration example of an information processing device according to a seventh embodiment. As illustrated in FIG. 18, an information processing device 1d is different from the information processing device 1 described above in that the information processing device 1d includes an AI system relearning control unit 20, a second training data generation unit 21, an AI system execution unit 22, and an AI system execution model 23.

The AI system relearning control unit 20 is a processing unit that controls relearning of an AI system such as an automatic translation system. Specifically, the AI system relearning control unit 20 inputs first training data D1 and second training data D2 to a processing control unit 10 at a specific timing (preset update timing of system) and obtains corrected second training data D21 and corrected first training data D11. Next, the AI system relearning control unit 20 retrains the AI system execution model 23 using the obtained corrected second training data D21.

The second training data generation unit 21 is a processing unit that generates the second training data D2. Specifically, the second training data generation unit 21 collects input and output data at the time of an operation of an Al system, compares the collected data with the first training data D1, and obtains newly collected data (new case). Next, the second training data generation unit 21 synthesizes the newly collected data (input and output) with the first training data D1 and generates the second training data D2.

The AI system execution unit 22 is an operation unit of the AI system, and applies data, input to the AI system, to the AI system execution model 23 and provides an output obtained from the AI system execution model 23.

The AI system execution model 23 is a machine learning model with a machine learning technology, used to provide an output for the input of the Al system.

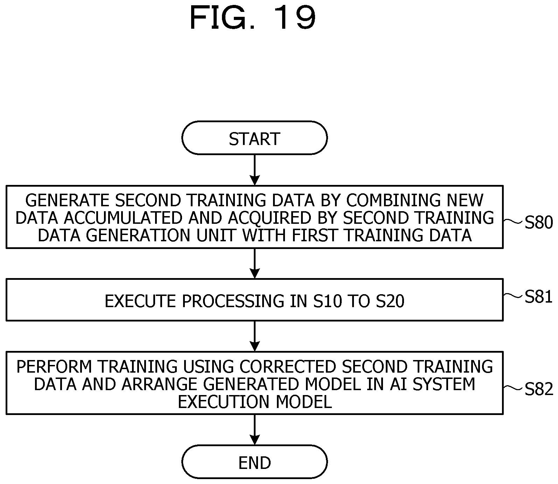

FIG. 19 is a flowchart illustrating an operation example of the information processing device according to the seventh embodiment. As illustrated in FIG. 19, when processing starts, new data accumulated and acquired by the second training data generation unit 21 is combined with the first training data D1 so as to generate the second training data D2 (S80).

Next, the AI system relearning control unit 20 inputs the generated second training data D2 to the processing control unit 10 together with the first training data D1 and executes the processing in S10 to S20 (S81). Next, the AI system relearning control unit 20 performs machine learning using the corrected second training data D21 obtained through the processing in S81 and arranges the generated model in the AI system execution model 23 (S82).

In this way, in the seventh embodiment, the corrected second training data D21 is generated at a specific timing, and the AI system execution model 23 may be updated through retraining based on the generated corrected second training data D21. As a result, for example, it is possible to automatically update a model in an automatic translation system to a model that copes with a word change (concept drift).

### (Others)

Note that each of the illustrated components in each of the devices does not necessarily have to be physically configured as illustrated in the drawings. In other words, specific modes of distribution and integration of the devices are not limited to those illustrated, and all or a part of the devices may be configured by being functionally or physically distributed and integrated in an optional unit depending on various loads, use situations, and the like.

Furthermore, all or optional part of various processing functions of the model learning unit 11, the score calculation unit 12, the score evaluation calculation unit 13, the score temporary storage unit 14, the training data generation unit 15, and the statistical information acquisition unit 16 executed by the processing control unit 10 of the information processing device 1 may be executed on a CPU (or microcomputer such as MPU or micro controller unit (MCU)). Furthermore, it is needless to say that all or an optional part of various processing functions may be executed on a program analyzed and executed by a CPU (or microcomputer such as MPU or MCU) or on hardware by wired logic. Furthermore, various processing functions executed with the information processing device 1 may be executed by a plurality of computers in cooperation through cloud computing.

### (Computer Configuration Example)

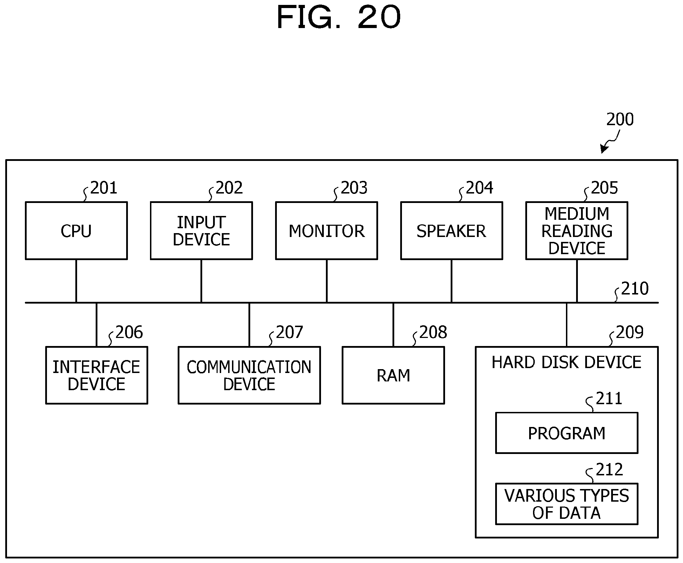

Meanwhile, various types of processing described in the embodiments described above may be implemented by executing a program prepared beforehand on a computer. Thus, hereinafter, an example of a computer configuration (hardware) that executes a program having functions similar to the functions of the embodiments described above will be described. FIG. 20 is a block diagram illustrating an example of a computer configuration.

As illustrated in FIG. 20, a computer 200 includes a CPU 201 that executes various types of arithmetic processing, an input device 202 that receives data input, a monitor 203, and a speaker 204. Furthermore, the computer 200 includes a medium reading device 205 that reads a program or the like from a storage medium, an interface device 206 to be connected to various devices, and a communication device 207 to be connected to and communicate with an external device in a wired or wireless manner. Furthermore, the information processing device 1 includes a RAM 208 that temporarily stores various types of information, and a hard disk device 209. Furthermore, each of the units (201 to 209) in the computer 200 is connected to a bus 210.

The hard disk device 209 stores a program 211 used to execute various types of processing of the functional configurations described in the above embodiments (for example, processing control unit 10, model learning unit 11, score calculation unit 12, score evaluation calculation unit 13, score temporary storage unit 14, training data generation unit 15, statistical information acquisition unit 16, similarity calculation unit 17, re-execution processing unit 18, AI system relearning control unit 20, second training data generation unit 21, and Al system execution unit 22). Furthermore, the hard disk device 209 stores various types of data 212 that the program 211 refers to. The input device 202 receives, for example, an input of operation information from an operator. The monitor 203 displays, for example, various screens operated by the operator. The interface device 206 is connected to, for example, a printing device or the like. The communication device 207 is connected to a communication network such as a local area network (LAN), and exchanges various types of information with an external device via the communication network.

The CPU 201 reads the program 211 stored in the hard disk device 209 and develops the program 211 in the RAM 208, and executes the program 211 so as to execute various types of processing regarding the functional configurations described above (for example, processing control unit 10, model learning unit 11, score calculation unit 12, score evaluation calculation unit 13, score temporary storage unit 14, training data generation unit 15, statistical information acquisition unit 16, similarity calculation unit 17, re-execution processing unit 18, AI system relearning control unit 20, second training data generation unit 21, and Al system execution unit 22). In other words, the CPU 201 is an example of a control unit. Note that the program 211 does not have to be stored in the hard disk device 209. For example, the program 211 stored in a storage medium readable by the computer 200 may be read and executed. For example, the storage medium readable by the computer 200 corresponds to a portable recording medium such as a CD-ROM, a DVD disk, or a universal serial bus (USB) memory, a semiconductor memory such as a flash memory, a hard disk drive, or the like. Furthermore, the program 211 may be stored in a device connected to a public line, the Internet, a LAN, or the like, and the computer 200 may read the program 211 from the device to execute the program 211.

### CITATION LIST

### PATENT DOCUMENT

Patent Document 1: Japanese Laid-open Patent Publication No. 2019-149030

### REFERENCE SIGNS LIST

1, 1a to 1dinformation processing device
10processing control unit
11model learning unit
12score calculation unit
13score evaluation calculation unit
14score temporary storage unit
15training data generation unit
16statistical information acquisition unit
17similarity calculation unit
18re-execution processing unit
20AI system relearning control unit
21second training data generation unit
22AI system execution unit
23AI system execution model
200computer
201CPU
202input device
203monitor
204speaker
205medium reading device
206interface device
207communication device
208RAM
209hard disk device
210bus
211program
212various types of data
D1first training data
D2second training data
D3third training data
D11corrected first training data
D21corrected second training data
M1first model
M2second model
M3third model

## Claims

1. A training data generation program for causing a computer to execute processing comprising:
acquiring a first value by inputting first data included in a plurality of pieces of first training data to a first model that is generated through machine learning based on the plurality of pieces of first training data;
acquiring a second value by inputting the first data and second data included in a plurality of pieces of second training data to a second model that is generated through machine learning based on the plurality of pieces of first training data and the plurality of pieces of second training data;
comparing the first value with the second value; and
generating a plurality of pieces of third training data that does not include at least a part of the first data, based on the plurality of pieces of first training data and the plurality of pieces of second training data, according to a result of the comparison.

2. The training data generation program according to claim 1, wherein
the comparing processing includes processing of comparing a first deviation for an average of the first value and a second deviation for an average of the second value, and
at least a part of the first data is training data that includes the first data of which a difference between the first deviation and the second deviation satisfies a specific condition.

3. The training data generation program according to claim 1, for causing the computer to execute processing further comprising:
acquiring statistical information of each event that corresponds to the first data included in the plurality of pieces of first training data and each event that corresponds to the second data included in the plurality of pieces of second training data, wherein
at least a part of the first data is training data that includes the first data that corresponds to a case of which the acquired statistical information satisfies a specific condition.

4. The training data generation program according to claim 1, for causing the computer to execute processing further comprising:
calculating a similarity between the first data and the second data, wherein
at least a part of the first data is training data that includes the first data of which the calculated similarity satisfies a specific condition.

5. The training data generation program according to claim 1, for causing the computer to execute processing further comprising:
acquiring a third value by inputting third data included in the plurality of pieces of third training data to a third model that is generated through machine learning based on the plurality of pieces of the generated third training data;
comparing the third value with the second value; and
determining whether or not the third data is suitable as training data according to a result of the comparison.

6. The training data generation program according to claim 1, for causing the computer to execute processing further comparing:
re-executing the processing of acquiring the second value, the comparing processing, and the generating processing while assuming that the plurality of pieces of the generated third training data is the plurality of pieces of second training data.

7. The training data generation program according to claim 1, for causing the computer to execute processing further comprising:
applying a model generated through machine learning based on the plurality of pieces of the generated third training data to a model that is operated by a system.

8. A training data generation method implemented by a computer, the training data generation method comprising:
acquiring a first value by inputting first data included in a plurality of pieces of first training data to a first model that is generated through machine learning based on the plurality of pieces of first training data;
acquiring a second value by inputting the first data and second data included in a plurality of pieces of second training data to a second model that is generated through machine learning based on the plurality of pieces of first training data and the plurality of pieces of second training data;
comparing the first value with the second value; and
generating a plurality of pieces of third training data that does not include at least a part of the first data, based on the plurality of pieces of first training data and the plurality of pieces of second training data, according to a result of the comparison.

9. The training data generation method according to claim 8, wherein
the comparing processing includes processing of comparing a first deviation for an average of the first value and a second deviation for an average of the second value, and
at least a part of the first data is training data that includes the first data of which a difference between the first deviation and the second deviation satisfies a specific condition.

10. The training data generation method according to claim 8, the method further comprising:
acquiring statistical information of each event that corresponds to the first data included in the plurality of pieces of first training data and each event that corresponds to the second data included in the plurality of pieces of second training data, wherein
at least a part of the first data is training data that includes the first data that corresponds to a case of which the acquired statistical information satisfies a specific condition.

11. The training data generation method according to claim 8, the method further comprising:
calculating a similarity between the first data and the second data, wherein
at least a part of the first data is training data that includes the first data of which the calculated similarity satisfies a specific condition.

12. The training data generation method according to claim 8, the method further comprising:
acquiring a third value by inputting third data included in the plurality of pieces of third training data to a third model that is generated through machine learning based on the plurality of pieces of the generated third training data;
comparing the third value with the second value; and
determining whether or not the third data is suitable as training data according to a result of the comparison.

13. The training data generation method according to claim 8, the method further comparing:
re-executing the processing of acquiring the second value, the comparing processing, and the generating processing while assuming that the plurality of pieces of the generated third training data is the plurality of pieces of second training data.

14. The training data generation method according to claim 8, the method further comprising:
applying a model generated through machine learning based on the plurality of pieces of the generated third training data to a model that is operated by a system.

15. A training data generation apparatus comprising:
a control unit configured to perform processing including:
acquiring a first value by inputting first data included in a plurality of pieces of first training data to a first model that is generated through machine learning based on the plurality of pieces of first training data;
acquiring a second value by inputting the first data and second data included in a plurality of pieces of second training data to a second model that is generated through machine learning based on the plurality of pieces of first training data and the plurality of pieces of second training data;
comparing the first value with the second value; and
generating a plurality of pieces of third training data that does not include at least a part of the first data, based on the plurality of pieces of first training data and the plurality of pieces of second training data, according to a result of the comparison.

16. The training data generation apparatus according to claim 15, wherein
the comparing processing includes processing of comparing a first deviation for an average of the first value and a second deviation for an average of the second value, and
at least a part of the first data is training data that includes the first data of which a difference between the first deviation and the second deviation satisfies a specific condition.

17. The training data generation apparatus according to claim 15, the processing further comprising:
acquiring statistical information of each event that corresponds to the first data included in the plurality of pieces of first training data and each event that corresponds to the second data included in the plurality of pieces of second training data, wherein
at least a part of the first data is training data that includes the first data that corresponds to a case of which the acquired statistical information satisfies a specific condition.

18. The training data generation apparatus according to claim 15, the processing further comprising:
calculating a similarity between the first data and the second data, wherein
at least a part of the first data is training data that includes the first data of which the calculated similarity satisfies a specific condition.

19. The training data generation apparatus according to claim 15, the processing further comprising:
acquiring a third value by inputting third data included in the plurality of pieces of third training data to a third model that is generated through machine learning based on the plurality of pieces of the generated third training data;
comparing the third value with the second value; and
determining whether or not the third data is suitable as training data according to a result of the comparison.

20. The training data generation apparatus according to claim 15, the processing further comparing:
re-executing the processing of acquiring the second value, the comparing processing, and the generating processing while assuming that the plurality of pieces of the generated third training data is the plurality of pieces of second training data.

21. The training data generation apparatus according to claim 15, the processing further comprising:
applying a model generated through machine learning based on the plurality of pieces of the generated third training data to a model that is operated by a system.
